Europäisches Patentamt

European Patent Office

Office européen des brevets

(19)

(11) Publication number: **0 015 153**
**B1**

(12) **EUROPEAN PATENT SPECIFICATION**

(45) Date of publication of patent specification: **22.06.83**

(51) Int. Cl.³: **B 42 C 9/00**

(21) Application number: **80300510.7**

(22) Date of filing: **21.02.80**

(54) **Binding apparatus and method.**

(30) Priority: **22.02.79 US 13869**

(43) Date of publication of application:
**03.09.80 Bulletin 80/18**

(45) Publication of the grant of the patent:
**22.06.83 Bulletin 83/25**

(84) Designated Contracting States:
**DE FR GB**

(56) References cited:
**US - A - 3 560 290**
**US - A - 3 793 016**
**US - A - 3 794 550**

(73) Proprietor: **EASTMAN KODAK COMPANY**
**Patent Department 343 State Street**
**Rochester, New York 14650 (US)**

(72) Inventor: **Smith, Robert Charles, Jr.**
**901 Elmgrove Road**
**Rochester, New York (US)**
Inventor: **McGlen, James Allen**
**901 Elmgrove Road**
**Rochester, New York (US)**

(74) Representative: **Pepper, John Herbert et al,**
**KODAK LIMITED Patent Department P.O. Box 114**
**190 High Holborn**
**London WC1V 7EA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Binding apparatus and method

The present invention relates to binding apparatus and method for securing together a plurality of sheets having a heat-sealable material between adjacent surfaces of the sheets.

U.S. Patent Numbers 3,793,016 and 3,794,550 disclose xerographic copiers and processes wherein a pattern of toner is applied along an edge portion of each of a plurality of copy sheets and fused to the copy sheets as the copies are made. Then the sheets are arranged so that the pattern of toner is overlapping on adjacent sheets, and the toner is heated to re-fuse the toner, thereby to bind the adjacent sheets together. These patents disclose both on-line binding apparatus and off-line binding apparatus wherein re-fusing of toner secures the sheets together.

Difficulties are sometimes encountered in practising the sheet binding process described in the referenced patents. More specifically, the time required by that process to transfer sufficient heat through a thick stack of copy sheets to effect refusing of the toner for bonding is often so long as to make it impractical to carry out on-line binding of thick stacks of copy sheets, especially with high-speed copier/duplicator apparatus. Off-line binding of thick stacks is possible by allowing long time periods for re-fusing of toner, however, it clearly is advantageous to provide apparatus for accomplishing on-line binding at the rate the copies are produced by relatively high speed copier/duplicator machines.

Another disadvantage of the binding apparatus and method disclosed in the aforementioned patents is that all the toner that is to be re-fused to effect binding is heated simultaneously. Thus all of it is re-fused each time the toner heaters effect binding. When additional sheets are to be added to a bound stack and the sheets are reheated again, some of the toner must be re-fused a second time in order to adhere the new sheets to the stack. Such refusing adversely affects the bonding strength between those sheets that are bound by the toner that was re-fused twice.

It is also known in the art to provide patterned heating shoes or bars for various purposes. Such patterned heating bars are disclosed, for example, in U.S. Patent Numbers 3258385, 3560290 and 4070513. Patterned heating bars such as disclosed in those patents are used for applying a pattern of heat to seal film or the like only once, that is, the patterned heating bar is not moved into engagement with the joint to be sealed more than once.

In accordance with the present invention there is provided a method for securing together a plurality of sheets having a heat-sealable material between adjacent surfaces of the sheets, the method comprising the step of supporting a group of unattached sheets in overlapping relation with the heat-sealable material located between adjacent sheets and the step of selectively heating a first portion of the heat-sealable material, characterised in that the binding method further comprises the step of placing over the group of sheets a second group of unattached sheets with the heat-sealable material located between adjacent sheets of the second group and between the second group and one sheet of the first-mentioned group, and the step of selectively heating a first portion of the heat-sealable material between sheets of the second group and also a portion of the heat-sealable material between the second group and one sheet of the first group aligned with the first portion of the heat-sealable material of the second group, the first portion of the heat-sealable material of the second group of sheets being offset from the first portion of the heat-sealable material of the first group of sheets.

In accordance with the present invention there is also provided binding apparatus for carrying out the method set out in the immediately preceding paragraph comprising a supporting means for supporting a group of unattached sheets in overlapping relation, and a heating bar for selectively applying heat, the heating bar being movable toward and away from the supporting means, characterised in that the heating bar is additionally movable transversely of the supporting means between positions of heat transferring engagement with any sheets supported thereby, and by means for placing over the said group of sheets a second group of unattached sheets.

The present invention will now be described, by way of example, with reference to the accompanying drawings, in which:

Figure 1 is a fragmentary elevation view, partially broken away, illustrating a finisher for copy sheets received from a copier/duplicator, the finisher incorporating the binding apparatus of the present invention;

Figure 2 is an enlarged detail view of the binding apparatus of the present invention;

Figure 3 is an exploded view illustrating portions of the binding apparatus and a booklet being formed by the method and apparatus of the present invention; and

Figure 4 is a perspective view of a booklet formed by the binding apparatus of the present invention.

Because finishers and finishing methods are well known, the present description will be directed in particular to those elements or steps forming part of the binding apparatus or method of the present invention. Elements of the apparatus or method steps not specifically described can be selected from those known in the art.

The binding apparatus generally designated 34 of the present invention is shown incorporated in a finisher generally designated 10 which receives copy sheets 12 seriatim from a copier/duplicator 14. The copy sheets 12 are delivered to the finisher 10 through aligned openings or guide slots 16 and 18 in the copier/duplicator 14 and the finisher 10, respectively.

When the sheets 12 have information copied on only one side thereof (i.e. simplex copies), the copied information is on the lower face of the sheets 12 as the sheets 12 travel through the slots 16, 18. When the sheets 12 have information copied on both sides thereof (i.e. duplex copies), ordinarily the odd numbered pages face downwardly in the slots 16, 18.

The sheets 12 are advanced toward the binding apparatus 34 by a plurality of pairs of driven rollers 20 and idler rollers 22. The sheets 12 then engage a curved guide 24 which initially deflects the sheets 12 into the nip between a drive roller 26 and an idler roller 28. The guide 24 and rollers 26, 28 turn the sheet 12 over so that the side of the sheet 12 which was facing downwardly in the guide slots 16 and 18 faces generally upwardly as it leaves the roller 26 and the guide 24.

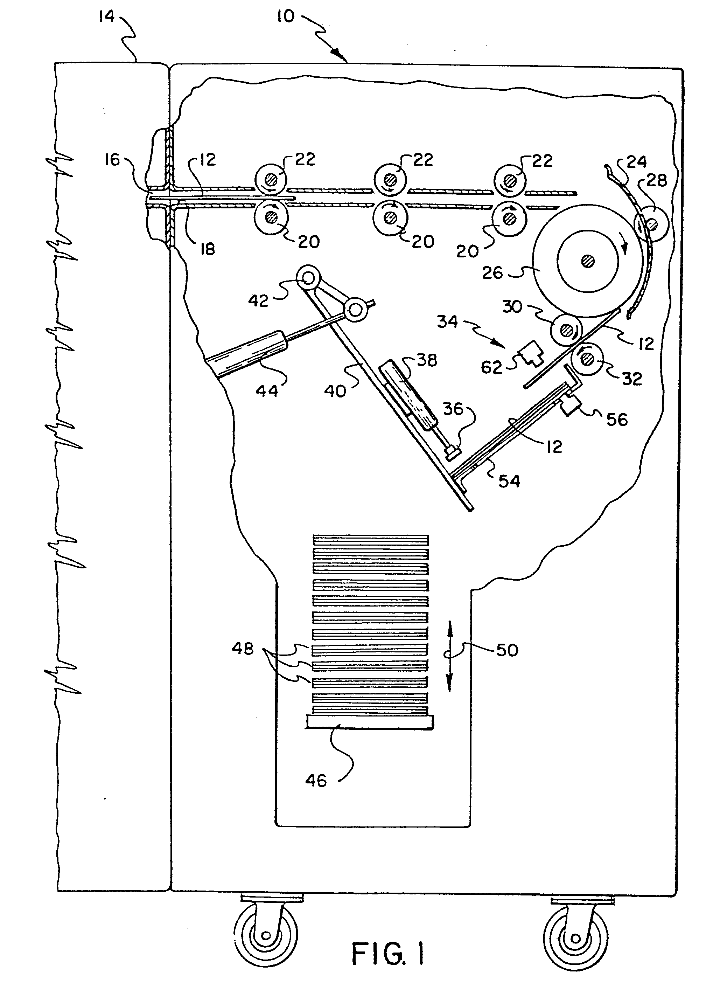

The guide 24 directs the sheet into the nip of a pair of rollers 30 and 32 which drive the sheets into the binding apparatus 34. After the binding apparatus 34 has secured together a stack of sheets 12, to form a booklet 48, the booklet 48 is gripped by a clamp 36 operated by a pneumatic cylinder 38. The clamp 36 and the cylinder 38 are supported on an arm 40 which is movable about a pivot 42 by another pneumatic cylinder 44 to bring the completed booklet 48 into a position over a tray 46 where the booklet 48 is released. The tray 46 supports a plurality of completed booklets 48, and the tray 46 is mounted on a lift for movement in an up and down direction as indicated by arrows 50 so that an entire stack of the booklets 48 may be accumulated on the tray 46 for removal. Except for the binding apparatus 34, the apparatus shown in Figure 1 is similar to that embodied in an earlier EKTAPRINT (a trademark) copier/duplicator and finisher manufactured by the applicant of the present application. The earier EKTAPRINT (a trademark) finisher has stiching apparatus for stapling stacks of sheets together in booklet form. The binding apparatus 34 of the present invention may be used in lieu of such stitching apparatus or in addition to that apparatus so that the user of the equipment has a choice of either stapling or binding by re-fusing of toner as disclosed hereinafter.

The adhesive material used for binding sheets together may be any suitable heat sealable adhesive, such as a thermoplastic adhesive, and preferably comprises a cross-linked toner composition. An example of such a cross-linked toner is disclosed in U.S. Patent No. 3,938,992.

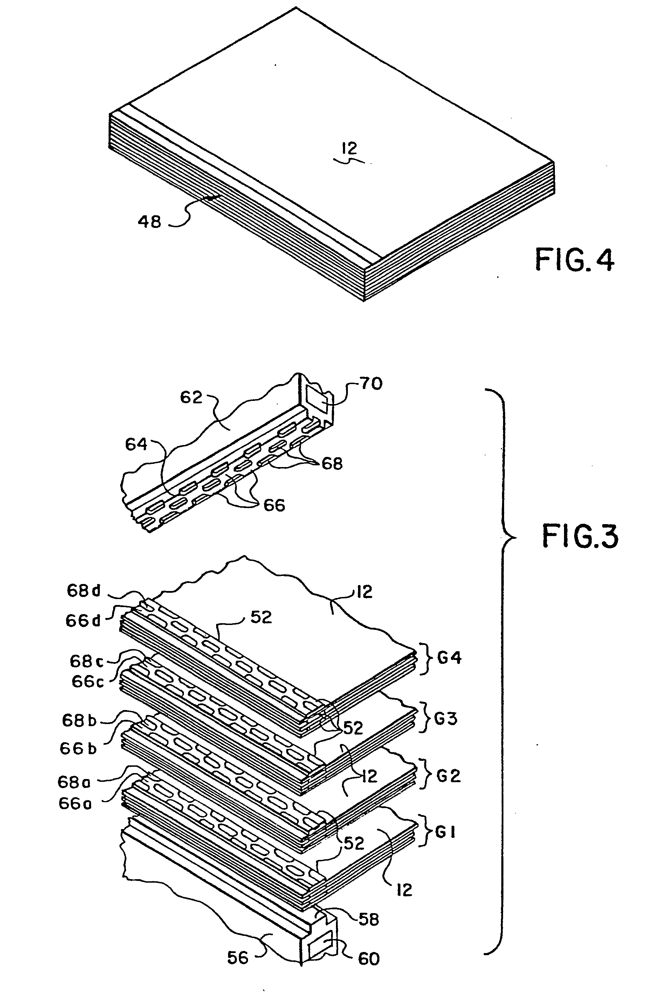

As sheets 12 pass through the copier/duplicator 14, image-wise distributions of toner particles are applied to the sheets 12, and then fused to the sheets 12 in order to provide an image of the original document onto the sheets 12 in the usual manner. Sheets 12 furnished to the binding apparatus 34 also are provided with a pattern of toner located in an area where it can be used in binding adjacent sheets together. The pattern and area comprise a stripe 52 of toner located adjacent and parallel to a side edge of the sheets 12 as illustrated in Figure 3. The sheets 12 are delivered to the binding apparatus 34 and received in a tray 54 which receives the sheets 12 and holds the stack of the sheets 12 with the toner stripes 52 of the sheets 12 aligned throughout the stack of sheets 12 in the tray 54.

Located beneath the tray 54 and in alignment with the portion of the sheets 12 having the toner stripe 52 thereon, is a heating shoe 56 that has a smooth, bar-like surface 58. As explained later, heat is transferred from the heating shoe 56 to the toner stripe 52 on sheets 12. A heating element 60 in the heating shoe 56 transfers heat to the surface 58. The surface 58 is located immediately beneath the tray 54, as shown in Figure 1, and is aligned with the toner stripe 52 on each of the sheets 12. The heating shoe 56 may extend along the upper edge of the tray 54 or it may project through a slot in the tray 54.

The heating shoe 56 is stationary and forms a back-up member for a movable heating bar 62. The heating bar 62 preferably has an elongate surface 64 with a pattern thereon comprising raised portions 66 and recessed portions 68. Heat is transmitted from the raised portions 66 to the toner stripes 52. The recessed portions 68 are located below the level of the raised portions 66 on surface 64, and the area of the raised portions 66 is substantially equal to the area of the recessed portions 68. Also, as illustrated in Figure 3, the raised portions 66 and recessed portions 68 are alternately arranged along the surface 64 in a repeating pattern that extends the entire length of the heating bar 62. The particular pattern shown in Figure 3 comprises three rows of elongate recessed portions 68, each recess in a row being spaced from the adjacent recesses in that row by a raised portion that extends a distance equal to the length of one of the recessed portions 68. Alternate rows of the recessed portions 68 are offset or staggered so that the first and third rows of the recessed portions 68 are aligned and the row therebetween is offset from the first and third rows by the length of one of the recessed portions 68. The first and third rows are separated by a distance equal to the width of one of the recessed portions 68. For example, the surface 64 may be about 1/4 inch (6.4 millimetres) wide, and each of the recessed portions 68 may be on the order of 1/4 inch (6.4 millimetres) in length. The raised portions 66 of the heating bar 62 are heated by means of a heating element 70 located in the heating bar 62. The heating elements 60 and 70 may be of any suitable type, such as electrical resistance heating elements.

When the sheets 12 have been furnished to the tray 54, relative movement is effected between the heating shoe 56 and the patterned surface 64 of the heating bar 62, thereby to bring the heating shoe 56 and the heating bar 62 into engagement with the sheets 12 on opposite sides of the toner stripes 52 with sufficient force to compress the sheets 12. The heat and pressure thus applied to the toner stripes 52 re-fuses a portion of the toner, thereby causing it to adhere not only to the sheet 12 on which it was originally fused but also to the adjacent sheet 12 contacted by the toner stripe 52. For example, a toner stripe 52 initially fused to the upper surface of a lower sheet 12 is also adhered to the bottom surface of the adjacent sheet 12 above the toner stripe 52.

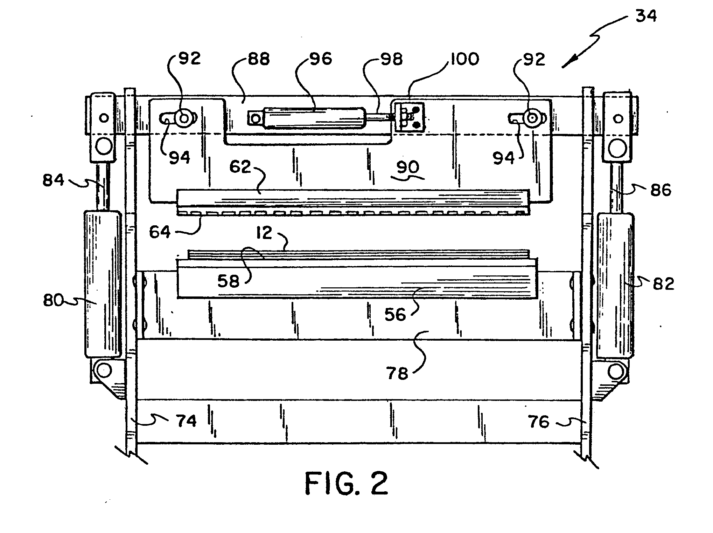

Figure 2 illustrates the binding apparatus 34 of the present invention. The binding apparatus 34 comprises means for mounting the heating shoe 56 and the heating bar 62, and for moving the heating bar 62 relative to the heating shoe 56. The finisher 10 has a pair of spaced frame members 74 and 76. A plate 78 has end flanges that are secured to the frame members 74 and 76. The heating shoe 56 is rigidly secured to the plate 78, thereby fixedly mounting the heating shoe 56 in position.

A pneumatic cylinder 80 is secured to the frame member 74, and a similar cylinder 82 is secured to the frame member 76. The cylinders 80 and 82 have rods 84 and 86, respectively, which are extended and retracted in a conventional manner. The rods 84 and 86 are connected to the ends of a plate 88. A plate 90 is secured to the plate 88 by bolts 92 which extend through elongate slots 94 in the plate 90 and into the plate 88, thereby providing for lateral (left or right) movement of the plate 90 relative to the plate 88. The heating bar 62 is fixed to the plate 90 and located with respect to the heating shoe 56 so that extension and retraction of the rods 84 and 86 upon operation of the cylinders 80 and 82 effects movement of the heating bar 62 toward and away from the heating shoe 56. Lateral movement of the plate 90, and thus of the heating bar 62, is achieved by a third pneumatic cylinder 96 which has an extensible rod 98 connected by means of a coupling 100 to the plate 90. The cylinder 96 is mounted on the plate 88 and the axis of the cylinder 96 and the rod 98 are aligned with the slots 94 so that extension and retraction of the rod 98 effects lateral movement of the plate 90 with respect to the plate 88. In this manner the position of the heating bar 62 may be shifted longitudinally, that is, in the direction of the rows of the raised portions 66 and the recessed portions 68 forming the pattern on the surface 64 of the heating bar 62. As is apparent from the following description of the operation of the binding apparatus 34, the heating bar 62 travels in a generally U-shaped path as it repetitively moves into and out of engagement with the sheets 12 between the heating bar 62 and the heating shoe 56.

The binding apparatus 34 is controlled by suitable means (not shown), such as from the computer that also controls operation of the associated copier/duplicator 14. The following description initially details the on-line binding method of the present invention; that is, the sheets 12 delivered to the tray 54 are directly from the copier/duplicator 14 and at the same rate they are produced by the copier/duplicator 14. In this method the binding apparatus 34 is required to bind sheets 12 together at the same rate as they are produced by operation of the copier/duplicator 14. In order to bind numerous copies produced at the high production rates common with modern copier/duplicators 14, the binding apparatus 34 preferably cycles to bind the sheets 12 together after each group of a few sheets 12 is fed to the binding apparatus 34, and additional sheets 12 are bound to each other, and to previously bound sheets 12 after each group of a few sheets 12 is received from the copier/duplicator 14. By way of example, the following describes the binding apparatus 34 cycling after delivery of each group of three sheets 12, and describes the formation of a booklet 48 comprising four groups of the sheets 12 as shown at G1—G4 in Figure 3. Very little time is required for binding sheets 12 together in small groups, such as groups of three sheets 12, because the length of time required for the heat to penetrate the sheets 12 to re-fuse the toner to effect bonding is directly related to the number and thickness of the stack of sheets 12.

Prior to operation of the finisher 10, the heating elements 60 and 70 are turned on to heat the surface 58 of the heating shoe 56 and the surface 64 of the heating bar 62. When the copier/duplicator 14 is operated, the sheets 12 are delivered to the tray 54 seriatim from the copier/duplicator 14 through the guide slots 16, 18 and through the nip formed by the rollers 30 and 32. After the first group G1 of three sheets 12 is in position in the tray 54, the cylinders 80 and 82 are activated to retract the associated rods 84 and 86, respectively, thereby moving the heating bar 62 toward the heating shoe 56 until the sheets 12 therebetween are compressed. Heat is transferred from the heating bar 62 and the heating shoe 56 through the toner stripes 52 located therebetween. Heat is transferred through the surface 58 of the heating shoe 56 along the full length and width of the toner stripe 52. However, heat is transferred from the heating bar 62 primarily through the raised portions 66 of the surface 64 so that refusing of the toner stripe 52 on at least the top sheet of the first group G1 of three sheets 12 is primarily in the area immediately beneath the raised portions 66, such re-fused portions being designated 66a in Figure 3. Thus the toner portion 66a on the uppermost sheet has been re-fused once whereas the remaining toner portion 68a, which lies beneath the recessed portions 68, remains unre-fused.

After the cylinders 80, 82 are operated to separate the heating bar 62 from the first group G1 of sheets 12, an additional group G2 of three sheets 12 is delivered to the tray 54 on top of the first group G1 of sheets 12. Before the second group G2 of three sheets 12 is re-fused or bound together the cylinder 96 is operated to move the rod 98, thereby shifting the plate 90 and the heating bar 62 by a distance equal to the spacing between two longitudinally adjacent recessed portions 68 in the pattern on the surface 64. Then the cylinders 80 and 82 are again operated to bring the heating bar 62 toward the heating shoe 56 to compress the second group G2 of three sheets 12 against the first group G1 of three sheets 12. Again, heat is transferred through the patterned surface 64 on the heating bar 62 and from the surface 58 of the heating shoe 56 to both the first and second groups of sheets. During this second heating cycle the raised portions 66 on the heating bar 62 directly overlie the previously unre-fused portion 68a on the first group G1 of three sheets so that the toner portion 68a is re-fused for the first time to bond the top sheet of the first group G1 of three sheets 12 to the bottom surface of the bottommost sheet in the second group G2 of three sheets 12. At the same time, there is another pattern of re-fused and unre-fused toner areas formed on the second group G2 of sheets 12, such being shown as 66b and 68b respectively. Due to the shifting of the heating bar 62 in a lateral direction parallel to its length as previously explained, all sheets 12 of the first two groups G1 and G2 have been adhered together by toner which has been re-fused only once, including the topmost sheet 12 of the first group G1 of three sheets 12 and the bottommost sheet 12 of the second group G2 of three sheets 12.

Similarly, the cylinders 80 and 82 are again operated to separate the heating bar 62 from the stack of sheets 12, the cylinder 96 is operated to shift the heating bar 62 laterally and, after another group G3 of three sheets 12 have been delivered to the tray 54 on top of the second group G2 of three sheets 12, the cylinders 80 and 82 again drive the heating bar 62 toward the heating shoe 56 so that the heating bar 62 engages the top one of the sheets 12 in the group G3 of sheets 12. At this time the pattern on the surface 64 of the heating bar 62 is located in the same relative position as it was when it engaged the first group G1 of three sheets 12 so that it again forms a pattern of re-fused and unre-fused toner portions designated 66c and 68c, respectively. Likewise the fourth group G4 of three sheets 12 shown in Figure 3 are bonded to each other and to the third group G3 of sheets 12 after the heating bar 62 has again been shifted laterally so that the re-fused portion 66d on the forth group G4 of sheets directly overlies the re-fused portion 66b. This process continues until all of the sheets 12 for a complete booklet have been bonded together.

By bonding together in groups of only a few sheets 12 at a time, the cycle time required for heating the toner stripes 52 sufficiently to effect re-fusing and thus bonding together of sheets 12 is quite short. At the same time, a thick booklet may be formed in this manner whilst the finisher 10 continues to operate on an on-line basis and without changing the cycle time of the associated copier/duplicator 14. Because the heating bar 62 is oscillated laterally back and forth in the manner described, each sheet 12 is adhered to the adjacent sheet 12 with "fresh" toner (toner which has been fused only once to the sheet of paper) rather than with toner which has been previously re-fused at least once. In this manner an improved bond is obtained, and this also permits the booklet to be built up in sets of only a few sheets 12 in order to obtain booklets of substantial numbers of sheets 12.

The method of the present invention also may be practised on an off-line basis by simply placing stacks of sheets 12 to be bonded together in the tray 54 and energising the cylinders 80 and 82 to bring the heating bar 62 toward the heating shoe 56 where it remains in place until sufficient heat is transferred through an entire stack of sheets 12 in order to bind all the sheets 12 together. Thus booklets of about twenty-five sheets 12 may be adhered together in a single cycle of operation. However, the time required for transfer of heat through a relatively thick booklet of this type is more than is normally available for on-line operation with high speed copier/duplicators.

The operating temperatures, pressures, time cycles and other parameters used depend on a number of factors, including the chemical composition of the particular toner or other adhesive used, the number of sheets in a group of sheets being bound together by the on-line method or the total number of sheets being bound together by the off-line method, and the thickness and type of paper used. For example, when a toner composition as described in U.S. Patent No. 3,938,992 and the previously mentioned EKTAPRINT (a trademark) copier/duplicators are used, the heating bars 60 and 70 may be heated to approximately 350 to 370°F (177 to 188°C) with the preferred temperature being 360°F (182°C). The air cylinders 80 and 82 receive air under sufficient pressure to exert a pressure of about 40 psi (2.8 kg/cm²) against the groups of sheets G1—G4.

When the binding apparatus 34 is used on-line with a copier/duplicator such as the before mentioned EKTAPRINT (a trademark) copier/duplicator (which produces copies at the rate of 4200 copies per hour) and when booklets are being formed in groups of three sheets, as explained hereinbefore, the total cycle time is approximately 1.1 second plus or minus 0.2 second. Of course, longer cycle times may be used when the copier production rate is lower and shorter cycle times are required for higher production rates. With respect to the off-line mode of operation, and assuming an operating temperature range of 350 to 370°F (177 to 188°C) and pressure exerted on the paper of about 40 psi (2.8 kg/cm²) the preferred time cycle for a stack of 10 sheets of paper in a group is fifteen seconds. Twenty-five sheets of paper will require approximately 30 seconds of time, and fifty sheets of paper will require approximately 90 seconds of time. These cycle times for the off-line mode of operation are the times required for binding all sheets together in a single bonding step in which the heating bar 62 and the heating shoe 56 remain in contact with the stack of sheets until all of the sheets are bound together.

The toner stripes 52 have been shown on the upper surface only of each sheet 12. However, if desired the toner stripe may alternatively be applied to the lower surface only or to both surfaces of a copy sheet. When duplex copies are being received from the copier/duplicator 14, toner stripes 52 may be applied to both surfaces or alternate sheets. When the upper and/or lower sheet of a booklet is a cover sheet that has not received a toner image in the copier/duplicator 14, the cover sheets may be adhered to the copy sheets with stripes of toner on those copy sheets adjacent to the cover sheets.

Whilst the binding apparatus 34 is engaged with sheets 12 to effect re-fusing of toner, the delivery of subsequent sheets 12 can be delayed by the rollers 20 and 22 of the finisher 10. Apparatus for effecting delayed delivery of sheets 12 is embodied in the previously-mentioned EKTAPRINT (a trademark) finisher.

The binding method of the present invention has been described in connection with the operation of the binding apparatus 34; however, the method steps may be carried out with other types of apparatus.

## Claims

1. A binding method for securing together a plurality of sheets having a heat-sealable material between adjacent surfaces of the sheets, the method comprising the step of supporting a group of unattached sheets in overlapping relation with the heat-sealable material located between adjacent sheets and the step of selectively heating a first portion of the heat-sealable material, characterised in that the binding method further comprises the step of placing over the group of sheets a second group of unattached sheets with the heat-sealable material located between adjacent sheets of the second group and between the second group and one sheet of the first-mentioned group, and the step of selectively heating a first portion of the heat-sealable material between sheets of the second group and also a portion of the heat-sealable material between the second group and one sheet of the first group aligned with the first portion of the heat-sealable material of the second group, the first portion of the heat-sealable material of the second group of sheets being offset from the first portion of the heat-sealable material of the first group of sheets.

2. Binding apparatus for carrying out the method as claimed in claim 1 comprising a supporting means (54) for supporting a group of unattached sheets (12) in overlapping relation, and a heating bar (62) for selectively applying heat, the heating bar (62) being movable toward and away from the supporting means (54), characterised in that the heating bar (62) is additionally movable transversely of the supporting means (54) between positions of heat transferring engagement with any sheets (12) supported thereby, and by means (30, 32) for placing over the said group of sheets (12) a second group of unattached sheets (12).

3. Binding apparatus as claimed in claim 2, characterised in that the heating bar (62) comprises a repeating pattern of raised portions (66), from which heat may be transferred to the sheets (12), and recessed portions (68).

4. Binding apparatus as claimed in claim 2 or 3, characterised in that the heating bar (62) is coupled to a pair of pneumatic cylinders (80, 82) for movement toward and away from the supporting means (54).

5. Binding apparatus as claimed in claim 2, 3 or 4, characterised in that the heating bar (62) is shiftable laterally by a third pneumatic cylinder (96).

6. Binding apparatus as claimed in claim 2, 3, 4 or 5 further characterised by a fixedly mounted heating shoe (56) located with respect to the supporting means (54) to be on the opposite side from the heating bar (62) of sheets (12) received in the supporting means (54) such that the heating bar (62) may exert pressure against sheets (12) located between the heating bar (62) and the heating shoe (56).

7. Binding apparatus as claimed in claim 6, characterised in that the heating shoe (56) has a smooth surface (58).

8. Binding apparatus as claimed in any one of claims 2 to 7 characterised in that the supporting means comprises a tray (54).

## Revendications

1. Procédé d'assemblage pour attacher ensemble plusieurs feuilles munies d'un produit de thermoscellage placé entre les surfaces adjacentes des feuilles, ce procédé comportant

l'étape suivant laquelle on maintient un groupe de feuilles libres en superposition avec le produit de thermoscellage placé entre les feuilles adjacentes et l'étape suivant laquelle on chauffe sélectivement une première partie du produit de thermoscellage, caractérisé en ce que le procédé d'assemblage comprend en outre l'étape suivant laquelle on place sur le groupe de feuilles un deuxième groupe de feuilles libres, le produit de thermoscellage étant disposé entre les feuilles adjacentes du deuxième groupe et entre ce dernier et une feuille du premier groupe cité, et l'étape suivant laquelle on chauffe sélectivement une première partie du produit de thermoscellage entre les feuilles du deuxième groupe et on chauffe aussi une partie du produit de thermoscellage placé entre le deuxième groupe et une feuille du premier groupe alignée avec la première partie du produit de thermoscellage du deuxième groupe, la première partie du produit de thermoscellage du deuxième groupe de feuilles étant décalée de la première partie du produit de thermoscellage du premier groupe de feuilles.

2. Appareil d'assemblage pour la mise en oeuvre du procédé conforme à la revendication 1, comprenant un moyen de support (54) pour supporter un groupe de feuilles libres (12) en superposition, et un barreau chauffant (62) pour appliquer sélectivement de la chaleur, le barreau chauffant (62) étant mobile suivant une direction de manière à se rapprocher ou à s'écarter du moyen de support (54), caractérisé en ce que le barreau chauffant (62) est en outre mobile transversalement à cette direction, entre des positions de contact pour transfert de chaleur avec les feuilles (12) supportées, des moyens (30, 32) étant prévus pour placer un deuxième groupe de feuilles libres (12) sur ledit groupe de feuilles (12).

3. Appareil conforme à la revendication 2, caractérisé en ce que le barreau chauffant (62) présente des surépaisseurs (66) suivant une configuration répétitive, surépaisseurs à partir desquelles on peut transférer de la chaleur aux feuilles (12), et des parties en creux (68).

4. Appareil conforme aux revendications 2 ou 3, caractérisé en ce que le barreau chauffant (62) est relié à une paire de vérins pneumatiques (80, 82) qui le rapprochent ou l'écartent du moyen de support (54).

5. Appareil conforme aux revendications 2, 3 ou 4, caractérisé en ce qu'un troisième vérin pneumatique (96) déplace latéralement le barreau chauffant (62).

6. Appareil conforme aux revendications 2, 3, 4 ou 5, caractérisé en outre par un mors chauffant fixe (56) disposé en face du barreau chauffant (62) de manière qu'ils soient placés de part et d'autre des feuilles (12) reçues dans le moyen de support (54), pour que le barreau chauffant (62) puisse exercer une pression sur les feuilles (12) placées entre le barreau (62) et le mors (56).

7. Appareil conforme à la revendication 6, caractérisé en ce que le mors chauffant (56) présente une surface lisse (58).

8. Appareil conforme à l'une quelconque des revendications 2 à 7, caractérisé en ce que le moyen de support comprend un bac (54).

**Patentansprüche**

1. Verfahren zum Binden mehrerer Blätter, die zwischen benachbarten Oberflächen ein heißsiegelfähiges Material besitzen, wobei eine Gruppe lose übereinander liegender Blätter mit zwischen benachbarten Blättern vorgesehenem heißsiegelfähigem Material von einer Trägereinrichtung aufgenommen und wahlweise ein erster Bereich des heißsiegelfähigen Materials erhitzt wird, dadurch gekennzeichnet, daß auf die Gruppe von Blättern eine zweite Gruppe loser Blätter so aufgelegt wird, daß sich das heißsiegelfähige Material zwischen benachbarten Blättern der zweiten Gruppe und zwischen der zweiten Gruppe und einem Blatt der ersten Gruppe befindet, und daß wahlweise ein erster Bereich des heißsiegelfähigen Materials zwischen Blättern der zweiten Gruppe und ein Bereich des heißsiegelfähigen Materials zwischen der zweiten Gruppe und einem Blatt der ersten Gruppe, das mit dem ersten Bereich des heißsiegelfähigen Materials der zweiten Gruppe ausgerichtet ist, erhitzt wird, wobei der erste Bereich des heißsiegelfähigen Materials der zweiten Gruppe von Blättern gegenüber dem ersten Bereich des heißsiegelfähigen Materials der ersten Gruppe von Blättern versetzt ist.

2. Gerät zur Durchführung des Verfahrens nach Anspruch 1, mit einer Trägereinrichtung (54) zur Aufnahme einer Gruppe lose übereinander liegender Blätter (12) und mit einem Heizstab (62), der wahlweise eine Heizwirkung ausübt und auf die Trägereinrichtung (54) zu und von ihr weg bewegbar ist, dadurch gekennzeichnet, daß der Heizstab (62) außerdem quer zur Trägereinrichtung (54) zwischen Positionen bewegbar ist, in denen er sich in Wärme übertragendem Kontakt mit den in der Trägereinrichtung aufgenommenen Blättern (12) befindet und daß Mittel (30, 32) vorgesehen sind, die dazu dienen, eine zweite Gruppe loser Blätter (12) auf die erste Gruppe von Blättern (12) aufzulegen.

3. Gerät nach Anspruch 2, dadurch gekennzeichnet, daß der Heizstab (62) eine sich wiederholendes Muster aus Erhebungen (66) aufweist, von denen aus Wärme auf die Blätter (12) übertragen werden kann, sowie aus Vertiefungen (68).

4. Gerät nach Anspruch 2 oder 3, dadurch gekennzeichnet, daß der Heizstab (62) mit zwei pneumatischen Zylindern (80, 82) gekoppelt ist, die den Heizstab auf die Trägereinrichtung (54) zu und von ihr weg bewegen.

5. Gerät nach Anspruch 2, 3 oder 4, dadurch gekennzeichnet, daß der Heizstab (62) mittels eines dritten pneumatischen Zylinders (96) seitlich verschiebbar ist.

6. Gerät nach Anspruch 2, 3, 4 oder 5, dadurch gekennzeichnet, daß ein fest gelagerter Heizschuh (56) so bezüglich der Trägereinrichtung (54) angeordnet ist, daß er dem Heizstab (62) für die von der Trägereinrichtung (54) aufgenommenen Blätter (12) gegenüberliegt, so daß der Heizstab (62) auf die zwischen ihm und dem Heizschuh (56) liegenden Blätter (12) Druck ausüben kann.

7. Gerät nach Anspruch 6, dadurch gekennzeichnet, daß der Heizschuh (56) eine glatte Oberfläche (58) besitzt.

8. Gerät nach einem der Ansprüche 2 bis 7, dadurch gekennzeichnet, daß die Trägereinrichtung einen Auffangbehälter (54) aufweist.

FIG. I

FIG. 2

FIG.4

FIG.3